# EUROPEAN PATENT SPECIFICATION

(11) **EP 2 166 292 B1**
(45) Date of publication and mention of the grant of the patent: **17.07.2019**
(21) Application number: 08169994.4
(22) Date of filing: 26.11.2008
(51) Int. Cl.: F24F 11/30, F24F 11/00, H04L 12/28, H04L 12/46

(54) **Communication method for air conditioner using different communication schemes**
Kommunikationsverfahren für Klimaanlage unter Verwendung verschiedenener Kommunikationsschemata
Procédé de communication pour climatiseur à l'aide de différents schémas de communication

(30) Priority: 17.09.2008 KR 20080090919
(43) Date of publication of application: 24.03.2010
(73) Proprietor: Samsung Electronics Co., Ltd., Suwon-si, Gyeonggi-do, 443-742 (KR)
(72) Inventor: Myoung, Kwan Joo, Gyeonggi-do (KR); Choi, Jae Ho, Bundang-gu, Seongnam-si Gyeonggi-do (KR); Kim, Sung Hoon, Maetan-3-dong Yeongtong-gu, Suwon-si Gyeonggi-do (KR); Jo, Su Ho, Bundang-gu, Seongnam-si Gyeonggi-do (KR)
(74) Representative: Grünecker Patent- und Rechtsanwälte PartG mbB

(56) References cited:
- EP-A1- 1 826 498
- GB-A- 2 372 113
- JP-A- H 074 728
- JP-A- S60 103 244
- JP-A- 2008 196 713
- KR-B1- 100 656 163
- US-A1- 2005 107 050

## Description

### BACKGROUND OF THE INVENTION

### 1. Field of the Invention

The present invention relates to a communication method for an air conditioner, and more particularly, to an air conditioner that performs communication using a different communication scheme according to the amount of communication.

### 2. Description of the Related Art

The air conditioner is generally used to cool or heat a room. The air conditioner performs cooling or heating utilizing a characteristic of a refrigerant circulating between an indoor unit and an outdoor unit in that the refrigerant observes surrounding heat when evaporated and discharges heat when liquefied.

In the conventional air conditioner, one indoor unit is generally installed for one outdoor unit. Recently, the demand is increasing for a multi-system air conditioner in which a plurality of indoor units having a variety of forms and capacities is connected to one or more outdoor units to perform cooling or heating in a place including a number of separate spaces such as a school, a company, or a hospital.

For such an air conditioner having a plurality of indoor units, it is important that outdoor and indoor units efficiently communicate with each other.

US 2005/107050 A1 discloses a communication amount monitoring circuit (124) that monitors a transmission buffer (123) to which communication data (122) is input, and discriminates the magnitude of the amount of communication data. If the amount of information per unit time is relatively large, information is read out from the transmission buffer in accordance with a chip clock. This information is modulated as communication data (137) by a modulator (139) and transmitted. If the amount of information is relatively small, information is read out from the transmission buffer (123) in accordance with a clock obtained by frequency-dividing the chip clock. This information is exclusive-ORed with a spreading code generated by using the chip clock and is then modulated by a modulator (139). The resultant data is transmitted as communication data (137). Since there is no change in the frequency of the communication data (137), there is no need to provide any resynchronization on the reception device side at the time of switching between the large and small amounts of information. There is therefore no need to provide any buffer area for resynchronization.

JP H07 4728 A discloses a multiple air conditioner which can perform the setting of addresses to a plurality of indoor units without requiring human hands automatically, and in addition, without making a mistake, and can drastically reduce a load being added to workers. A plurality of indoor units 21, 22,... are connected to one outdoor unit 10 by a pair of signal wires 20. The outdoor unit 10, when receiving an address undetermined signal from either one of the indoor units, determines an address setting mode and transmits an address setting mode signal to the signal wires 20 periodically. Each indoor unit transmits intrinsic data each time when receiving the address setting mode signal from the outdoor unit, and monitors a collision between the transmitted intrinsic data and other intrinsic data, and sets transmitting timings for the intrinsic data one after another on the basis of the priority sequence of collision data. Then, each indoor unit defines the set transmitting timing as its own address.

EP 1 826 498 A1 discloses a communications network for air-conditioning systems, comprising a plurality of fan coils (B) which correspond to respective wireless nodes of the network, each of the fan coils being provided with a respective wireless communications means (12) for bidirectional communication with the other fan coils (B) of the network and being further provided with a memory which contains instructions for exchanging messages with the nodes of the network according to a mesh-type logic by way of the wireless communications means.

GB 2 372 113 A discloses a control system with a communication function for monitoring and/or controlling devices (11, 12,...) through communication with the devices by means of a central device (30), wherein the devices (11, 12,...) each have means for inputting position information representing the positions, the central device (30) has means for collecting position information and device identification information from the devices (11, 12,...) and correlating the position information with the identification information about the devices (11, 12,...).

JP S60 103244 A discloses enabling to avoid next time a collision among transmitted messages even if the messages transmitted at the same time from among a plurality of units of controllers collide against each other once, by making periodical transmitting times of the same controllers differ through a unit number by providing unit number selecting switches on the same controllers a plurality of units of which is used. Controllers 7 of both indoor machines 8a, 8b are provided with unit number selecting switches 121a, 121b, both the controllers 7 are connected with remote controllers 10a, 10b further and a controller 4 of an outdoor machine 6, the controllers 7 of both the indoor machines 8a, 8b and the remote controllers 10a, 10b are connected through a two-wire type time-division multiple transmission line 11 with each other. The remote controllers 10a, 10b are provided also with unit number selecting switches 12a, 12b respectively. As periodical transmitting times of the unit number selecting switches 121a, 121b are made to differ from each other through a unit number, even if messages transmitted from a plurality of units of the controllers at the same time collide against each other, the collision is avoided next time.

JP 2008 196713 A discloses an air conditioner updating and changing a control program in a short period of time, and also to provide an indoor machine of the air conditioner. Whether a writing machine is connected to a terminal for connection of an outdoor machine disposed in an indoor machine is determined (S12) when a power source is on (S11), and the indoor machine performs communication with the writing machine to acquire the control program for rewriting (S13), when the writing machine is connected (S12:YES). Then the control program stored in a flash memory is rewritten to the newly-acquired control program (S14), and a state is transferred to a standby state for waiting an operation signal from a remote controller (S15).

KR 100 656 163 B1 discloses a method of controlling an air conditioner to prevent troublesome exchange of a control-based hardware of a plurality of indoor units due to exchange of hardware of an outdoor unit. A method of controlling an air conditioner includes the steps of attempting communication between an outdoor unit and a plurality of indoor units with at least one communication speed(S206), and setting a communication speed equal to the communication speed attempted by the outdoor unit among communication speeds supported by the plurality of indoor units to store the communication speed, and controlling communication with the outdoor unit with the stored communication speed(S218). The outdoor unit and the indoor units are communicated with each other according to RS-485 communication protocols.

### SUMMARY OF THE INVENTION

It is the object of the present application to provide a method, which enables communication between the components of an air conditioner at an approximately constant communication time.

This object is solved by the subject matter of the independent claims.

Preferred embodiments are defined by the dependent claims.

Therefore, it is an aspect of the invention to provide an air conditioner in which outdoor and indoor units communicate with each other using a different communication scheme according to the amount of data communication.

Additional aspects and/or advantages of the invention will be set forth in part in the description which follows and, in part, will be obvious from the description, or may be learned by practice of the invention.

The foregoing and/or other aspects of the present invention may be achieved by providing a communication method for an air conditioner in which at least one outdoor unit and a plurality of indoor units perform data communication with each other, the method including checking an amount of communication of the data communication, determining a communication scheme based on the amount of communication, and performing communication according to the determined communication scheme.

Preferably, the amount of communication is determined based on an average data amount change in the data communication.

Preferably, the communication scheme includes a time division scheme, a token ring scheme, and an event scheme.

Preferably, the time division scheme is selected when the amount of communication is equal to or greater than a first reference constant, the token ring scheme is selected when the amount of communication is less than the first reference constant and equal to or greater than a second reference constant, and the event scheme is selected when the amount of communication is less than the second reference constant.

Preferably, the amount of communication is determined based on a number of data collisions when communication is being performed according to the event scheme.

Preferably, the amount of communication is checked at regular intervals and the communication scheme is changed in real time to an optimal communication scheme according to a change in the amount of communication.

The foregoing and/or other aspects of the present invention may also be achieved by providing a communication method for an air conditioner in which at least one outdoor unit and a plurality of indoor units perform data communication with each other, the method including tracking an installation state of the air conditioner to check installation information of the air conditioner, selecting a communication scheme based on the installation information of the air conditioner, and performing communication according to the selected communication scheme.

Preferably, the communication scheme includes a time division scheme, a token ring scheme, and an event scheme.

Preferably, the time division scheme is selected when an amount of the installation information of the air conditioner is equal to or greater than a fifth reference constant, the token ring scheme is selected when the amount of the installation information of the air conditioner is less than the fifth reference constant and equal to or greater than a sixth reference constant, and the event scheme is selected when the amount of the installation information of the air conditioner is less than the sixth reference constant and communication is then performed according to the selected communication scheme.

Preferably, the communication method further includes checking an amount of communication of the data communication, changing the communication scheme based on the amount of communication, and performing communication according to the changed communication scheme.

Preferably, the amount of communication is determined based on an average data amount change in the data communication.

Preferably, the communication scheme includes a time division scheme, a token ring scheme, and an event scheme.

Preferably, the time division scheme is selected when the amount of communication is equal to or greater than a first reference constant, the token ring scheme is selected when the amount of communication is less than the first reference constant and equal to or greater than a second reference constant, and the event scheme is selected when the amount of communication is less than the second reference constant and communication is then performed according to the selected communication scheme.

Preferably, the amount of communication is determined based on a number of data collisions when communication is being performed according to the event scheme.

Preferably, the amount of communication is checked at regular intervals and the communication scheme is changed in real time to an optimal communication scheme according to a change in the amount of communication.

According to the communication method for the air conditioner according to the embodiments of the present invention as described above, when outdoor and indoor units perform data communication, the amount of data communication is checked and communication is performed using a communication scheme most appropriate for the checked amount of communication, thereby increasing data transfer rate and enabling an increase in the system size of the multi-system air conditioner without significantly increasing communication time.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 illustrates an overall configuration of an air conditioner according to an embodiment of the present invention.
FIG. 2 illustrates a detailed configuration of the air conditioner according to an embodiment of the present invention.
FIGS. 3A to 3C are timing diagrams illustrating a communication method according to an embodiment of the present invention.
FIG. 4 is a flow chart illustrating a communication control procedure for an air conditioner according to a first embodiment of the present invention.
FIGS. 5A and 5B are flow charts illustrating a communication control procedure for an air conditioner according to a second embodiment of the present invention.
FIG. 6 is a flow chart illustrating a communication control procedure for an air conditioner according to a third embodiment of the present invention.
FIGS. 7A and 7B are flow charts illustrating a communication control procedure for an air conditioner according to a fourth embodiment of the present invention.

### DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

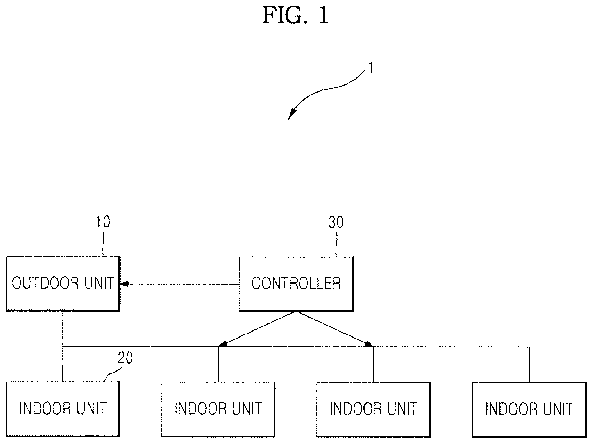

FIG. 1 illustrates an overall configuration of an air conditioner according to an embodiment of the present invention.

As shown in FIG. 1, the air conditioner 1 includes at least one outdoor unit 10, a plurality of indoor units 20, and a controller 30 to control the outdoor unit 10 and the indoor units 20.

In the case of a large building, one or more outdoor units 10 are installed according to the number of indoor units 20. The outdoor units 10 and the indoor units 20 are connected to the controller 30. Since the controller 30 serves to control the outdoor units 10 and the indoor unit 20, the system manager can centrally control the entirety of the air conditioner 1 by operating the controller 30.

The controller 30 can internally control the air conditioner 1 through signal communication based on the RS-485 communication standard and can be connected to the Internet which is based on the Ethernet communication standard.

As an interface standard for serial communication, the RS-485 communication standard is used as a communication standard for multipoint communication lines. The RS-485 standard uses a low-impedance driver and receiver and permits up to 128 nodes per line and has a different transmission distance according to transfer rate and can provide transmission over distances of up to 1200m.

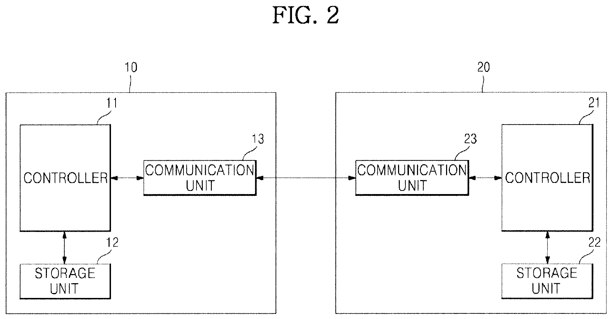

FIG. 2 illustrates a detailed configuration of the air conditioner according to an embodiment of the present invention.

As shown in FIG. 2, the outdoor unit 10 includes a controller 11 to control the overall operation of the outdoor unit 10, a storage unit 12 to store information regarding the air conditioner 1 and control information used to control the air conditioner 1, and a communication unit 13 to transmit and receive data, and each of the indoor units 20 includes a controller 21 to control the overall operation of the indoor unit 20, a storage unit 22 to store information regarding the air conditioner 1 and control information used to control the air conditioner 1, and a communication unit 23 to transmit and receive data. Reference will now be made in more detail to the controller 11, the storage unit 12, and the communication unit 13 included in the outdoor unit 10.

The controller 11 of the outdoor unit 10 controls the overall operation of the outdoor unit 10. In a time division scheme, when each indoor unit 20 transmits its own data to the outdoor unit 10 at a time assigned to the indoor unit 20, the controller 11 controls the outdoor unit 10 to receive data using the communication unit 13.

In a token ring scheme, the controller 11 of the outdoor unit 10 transmits a token ring signal to the indoor unit 20 at a first address and controls the outdoor unit 10 and the plurality of indoor units 20 to communicate with each other according to the token ring scheme. In the token ring and event scheme, when an indoor unit 20 transmits data to the outdoor unit 10, the controller 11 controls the outdoor unit 10 to receive data through the communication unit 13.

The controller 11 of the outdoor unit 10 checks the amount of communication at regular intervals and changes the communication scheme according to the checked amount of communication.

The amount of communication can be determined using a variety of methods. For example, the amount of communication can be determined using a variety of device installation information such as the number of indoor units installed per outdoor unit according to a result of tracking during initial installation and the communication scheme is then determined according to the amount of communication. Alternatively, the communication scheme can be determined according to the number of data collisions (only when an event communication scheme is employed) or an average data amount change during actual operation. The communication scheme may include a time division scheme, a token ring scheme, and an event scheme.

The average data amount change is the average change in the amount of data per unit time. As the average data amount change increases, the amount of data to be transmitted increases and accordingly the amount of communication increases.

The number of data collisions is a numerical value indicating the amount of data collision per unit time. As the number of data collisions increases, this indicates that the amount of communication increases.

The storage unit 12 of the outdoor unit 10 stores an address list table containing the addresses (1, 2, 3, ...n) of the indoor units 20 in increasing order of the address of the indoor unit 20. The storage unit 12 is a storage medium that can store the address list table such as a DRAM, an SDRAM, an RDRAM, a DDRAM, or an SRAM.

The communication unit 13 of the outdoor unit 10 receives information transmitted by the indoor unit 20 or transmits information to another device.

Reference will now be made in detail to the controller 21, the storage unit 22, and the communication unit 23 included in the indoor unit 20.

The controller 21 of the indoor unit 20 controls the overall operation of the indoor unit 20. In a time division scheme, the controller 21 counts the time and determines whether or not a predetermined allocated time has been reached and controls the indoor unit 20 to transmit its own data to the outdoor unit 10 when the predetermined allocated time has been reached.

In the token ring scheme, the controller 21 of each indoor unit 20 determines whether or not a token control signal has been received by the indoor unit 20. When a token control signal has been received, the controller 21 determines whether or not data to be transmitted to the outdoor unit 10 is present. If data to be transmitted to the outdoor unit 10 is present, the controller 21 controls the indoor unit 20 to transmit the data to the outdoor unit 10.

In the event scheme, the controller 21 determines whether or not data to be transmitted to the outdoor unit 10 is present. If data to be transmitted to the outdoor unit 10 is present, the controller 21 controls the indoor unit 20 to transmit the data to the outdoor unit 10.

The storage unit 22 of the indoor unit 20 stores a time allocated to each indoor unit 20 for the time division scheme.

The communication unit 23 of the indoor unit 20 serves to transmit a token control signal or data to another indoor unit 20.

Although communication schemes between the outdoor unit 10 and the indoor units 20 have been described in the above embodiment of the present invention, the present invention can also be applied to communication schemes between devices such as a refrigerant distributer, a relay, or a central controller.

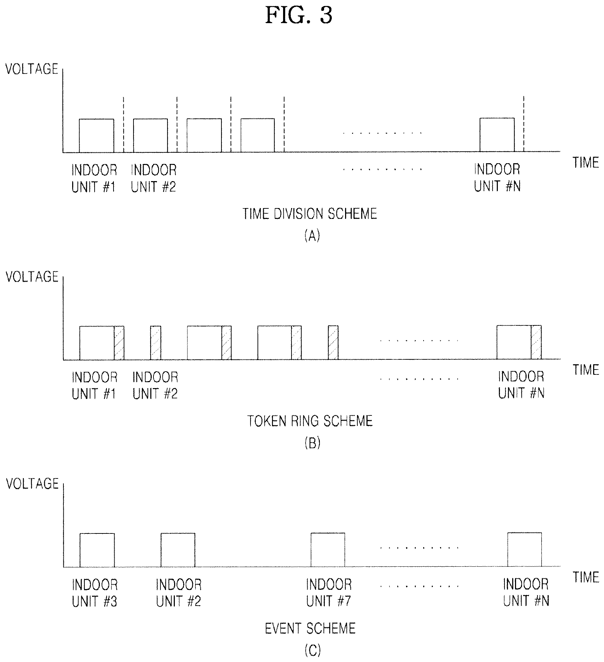

FIGS. 3A to 3C are timing diagrams illustrating a communication scheme according to an embodiment of the present invention.

FIG. 3A is a timing diagram illustrating a time division scheme in which each indoor unit 20 is allocated a time at which it can transmit data and transmits its own data to the outdoor unit 10 within a predetermined time when the allocated time has been reached. This scheme is efficient when the amount of data to be transmitted to each indoor unit 20 is great, i.e., when the amount of communication is great.

FIG. 3B is a timing diagram illustrating a token ring scheme in which indoor units 20 sequentially receive a control signal, which is referred to as a "token", to communicate through a communication line shared by the indoor units 20. That is, in the token ring scheme, an indoor unit 20 which has received the token can occupy the communication line and communicate through the communication line. Each shaded portion in FIG. 3B denotes the time during which each indoor unit receives the token.

FIG. 3C is a timing diagram illustrating a token ring scheme in which, when data to be transmitted (i.e., an event) is generated, the data is immediately transmitted. This scheme is efficient when the amount of communication is small since this scheme has a disadvantage in that, when the amount of communication increases, the number of data collisions between devices increases so that the time required to transmit data increases.

Among the communication schemes described above, a relatively efficient communication scheme is present according to the amount of communication. That is, in the embodiment of the present invention, the time division scheme, the token ring scheme, or the event scheme is selectively applied according to the amount of communication, thereby increasing data transfer rate, compared to the conventional scheme.

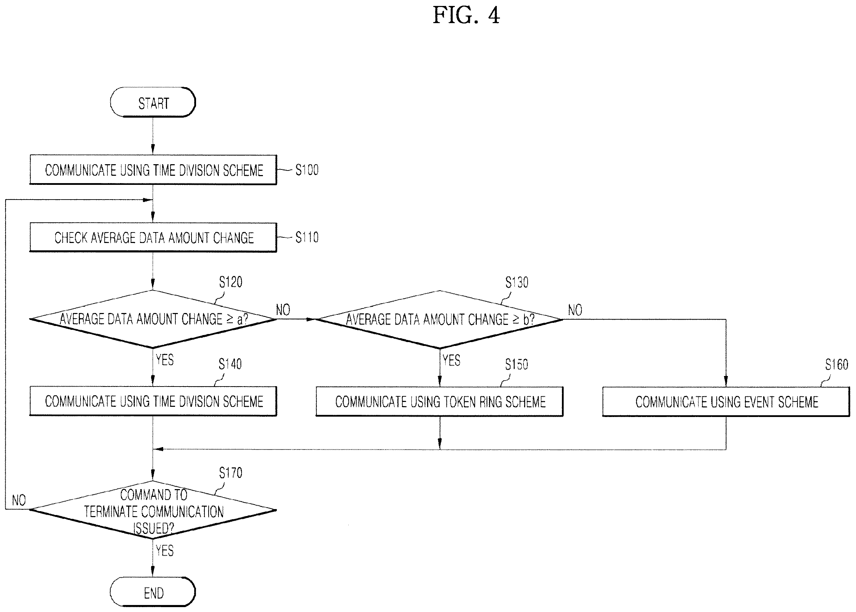

FIG. 4 is a flow chart illustrating a communication control procedure for an air conditioner according to a first embodiment of the present invention. At an initial stage of communication, the outdoor unit 10 starts communication according to the time division scheme (S100) and checks an average data amount change (S110). When the checked average data amount change is equal to or greater than a predetermined level (i.e., average data amount change ≥ a), the outdoor unit 10 determines that the amount of communication is great and maintains the communication scheme as the time division scheme (S120 and S140).

When it is determined that the checked average data amount change is at an intermediate level (i.e., a > average data amount change ≥ b), the outdoor unit 10 changes the currently used communication scheme to the token ring scheme (S130 and S150).

When it is determined that the checked average data amount change is less than a predetermined level (i.e., b > average data amount change), the outdoor unit 10 changes the currently used communication scheme to the event scheme (S130 and S160).

Then, the controller of the outdoor unit 10 checks whether or not the user has issued a command to terminate communication and returns to operation S110 if the user has not issued the command to terminate communication (S170).

When communication starts, the controller of the outdoor unit 10 performs tracking to acquire information of indoor units 20 connected to the communication line and information of other devices. Since the time division scheme is used in this process, the time division scheme is set as the initial communication scheme in the above embodiment. Communication may also be initiated according to another scheme if this scheme is set as a communication scheme for tracking performed at the initial stage of communication.

In this example, "a" and "b" denote reference levels by which the average data amount change is divided into different ranges. If it is assumed that line occupancy is 100% when the average data amount change is maximized, "a" can be determined to be an average data amount change when line occupancy is 70% and "a" can be determined to be an average data amount change when line occupancy is 30%. Specific levels of the average data amount change "a" and "b" can be optionally set by the designer, and it is assumed here that a>b and "a" is referred to as a "first reference constant" and "b" is referred to as a "second reference constant".

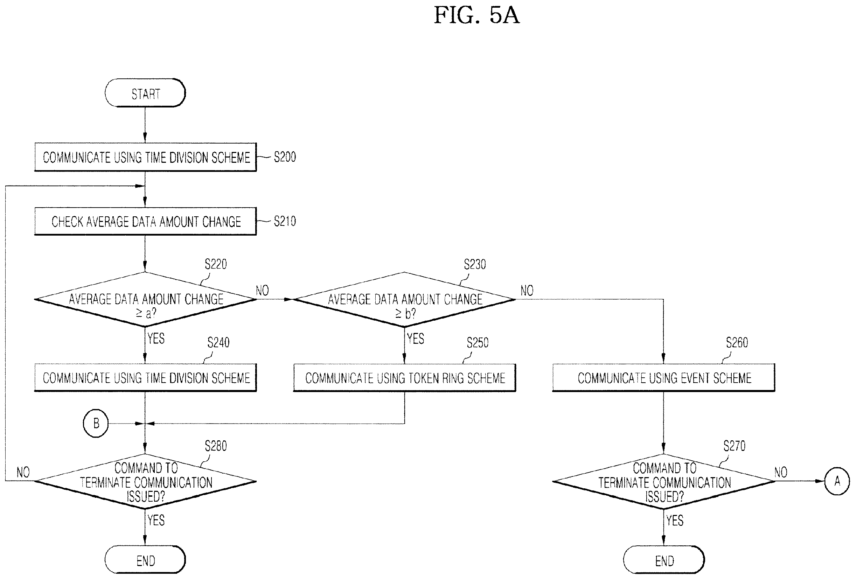

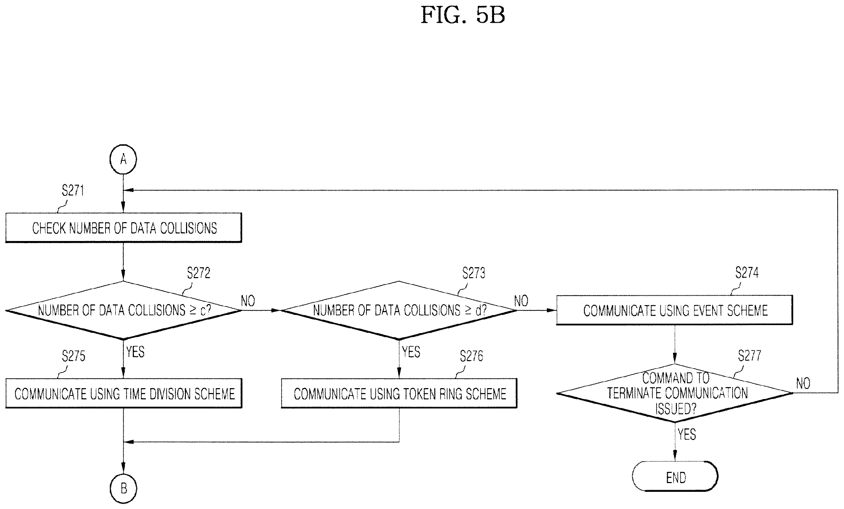

FIGS. 5A and 5B are flow charts illustrating a communication control procedure for an air conditioner according to a second embodiment of the present invention. In the first embodiment, the communication scheme is also determined according to the average data amount change during communication of the event scheme. Unlike the first embodiment, the communication scheme is determined according to the number of data collisions during communication of the event scheme in this embodiment.

As shown in FIGS. 5A and 5B, at an initial stage of communication, the outdoor unit 10 starts communication according to the time division scheme (S200) and checks the average data amount change (S210). When the checked average data amount change is equal to or greater than a predetermined level (i.e., average data amount change ≥ a), the outdoor unit 10 determines that the amount of communication is great and maintains the communication scheme as the time division scheme (S220 and S240).

When it is determined that the checked average data amount change is at an intermediate level (i.e., a > average data amount change ≥ b), the outdoor unit 10 changes the currently used communication scheme to the token ring scheme (S230 and S250).

When it is determined that the checked average data amount change is less than a predetermined level (i.e., b > average data amount change), the outdoor unit 10 changes the currently used communication scheme to the event scheme (S230 and S260).

Then, when the communication scheme has been maintained as the time division scheme used at the initial stage of communication (S240) or when the communication scheme has been changed to the token ring scheme (S250), the controller of the outdoor unit 10 checks whether or not the user has issued a command to terminate communication and returns to operation S210 if the user has not issued the command to terminate communication (S280).

On the other hand, when the communication scheme has been changed to the event scheme (S260), the controller of the outdoor unit 10 checks whether or not the user has issued a command to terminate communication and checks the number of data collisions if the user has not issued the command to terminate communication (S270 and S271).

If the checked number of data collisions is equal to or greater than a predetermined level (i.e., the number of data collisions ≥ c), the controller of the outdoor unit 10 determines that the amount of communication is great and changes the communication scheme to the time division scheme (S272 and S275).

If it is determined that the checked number of data collisions is at an intermediate level (i.e., c > the number of data collisions ≥ d), the controller of the outdoor unit 10 changes the currently used communication scheme to the token ring scheme (S273 and S276).

In addition, if it is determined that the checked number of data collisions is less than a predetermined level (i.e., d > the number of data collisions), the controller of the outdoor unit 10 maintains the currently used event scheme (S273 and S274).

Then, when the currently used event scheme has been changed to the time division scheme or the token ring scheme (S275 or S276), the controller of the outdoor unit 10 checks whether or not a command to terminate communication has been issued and returns to operation S210 if no command to terminate communication has been issued (S280).

On the other hand, if the currently used communication scheme is the event scheme and has not been changed since it is determined that the number of data collisions is less than a predetermined level, the controller of the outdoor unit 10 checks whether or not a command to terminate communication has been issued and returns to operation S271 if no command to terminate communication has been issued (S277).

In this example, "c" and "d" denote reference levels by which the number of data collisions is divided into different ranges. If it is assumed that the greatest number of data collisions is 10 per minute, "c" can be determined to indicate 7 data collisions per minute and "a" can be determined to indicate 3 data collisions per minute. Specific levels of the number of data collisions "c" and "d" can be optionally set by the designer, and it is assumed here that c>d and "c" is referred to as a "third reference constant" and "d" is referred to as a "fourth reference constant".

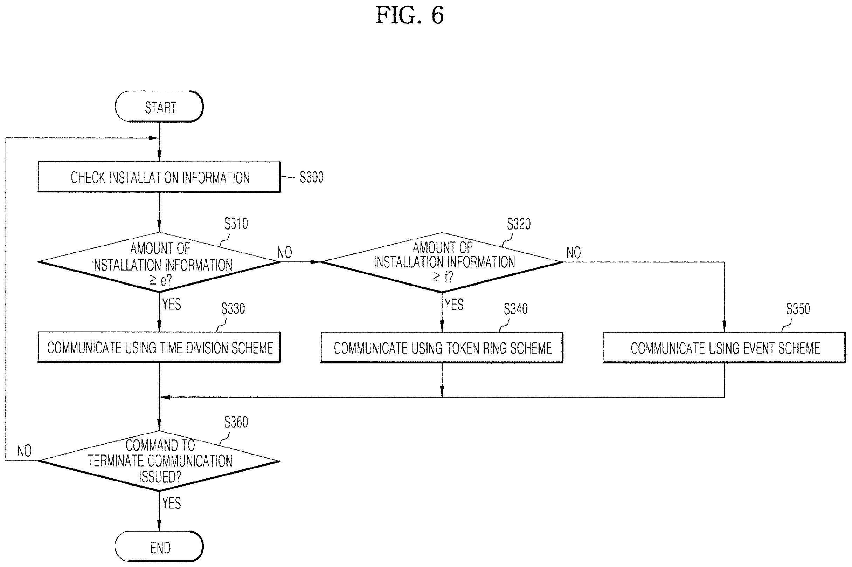

FIG. 6 is a flow chart illustrating a communication control procedure for an air conditioner according to a third embodiment of the present invention.

As shown in FIG. 6, when communication starts, the controller of the outdoor unit 10 checks installation information of the outdoor unit 10 and the indoor units 20 and other devices (S300). The controller of the outdoor unit 10 can check the installation information through tracking. The following is a brief description of the tracking.

In the embodiments of the present invention, the time division scheme is used as a communication scheme for tracking. When communication starts, each device connected to the communication line is allocated a time at which the device can transmit information and transmits its own information to the outdoor unit 10, which is a main communication entity, when the allocated time has been reached. Specifically, the outdoor unit 10 as a main communication entity can receive respective installation information that the plurality of indoor units 20 included in the air conditioner, a refrigerant distributor, etc., have transmitted at regular intervals and can check and store the information of the devices connected to the communication line using installation information of the outdoor unit 10 and the received installation information of the indoor units 20, the refrigerant distributor, etc. A series of these processes is referred to as "tracking".

On the other hand, the controller of the outdoor unit 10 determines the communication scheme based on the installation information of the indoor units 20 and other devices connected to the communication line that have been checked through the tracking. Specifically, based on information regarding the capacity, the number, and the type of each device connected to the communication line, the controller of the outdoor unit 10 performs communication according to the token ring scheme when the amount of installation information is within an appropriate range (e > the amount of installation information > f), according to the time division scheme when the amount of installation information is greater than the appropriate range (the amount of installation information ≥ e), and according to the event scheme when the amount of installation information is less than the appropriate range (f > the amount of installation information) (S310, S320, S330, S340, and S350). Here, the amount of installation information indicates the amount of information regarding the capacity, the number, and the type of each of the devices that are connected to the communication line to perform communication.

The level of the amount of information of "e" and "f" can be optionally set by the designer, and it is assumed here that e>f and "e" is referred to as a "fifth reference constant" and "f" is referred to as a "sixth reference constant". Since the tracking process is performed at regular intervals not only at the initial stage of communication but also during communication, the controller of the outdoor unit 10 returns to operation S300 to check installation information if no command to terminate communication has been issued and performs, when the installation information has been changed, communication according to a communication scheme most appropriate for the amount of the changed installation information (S360).

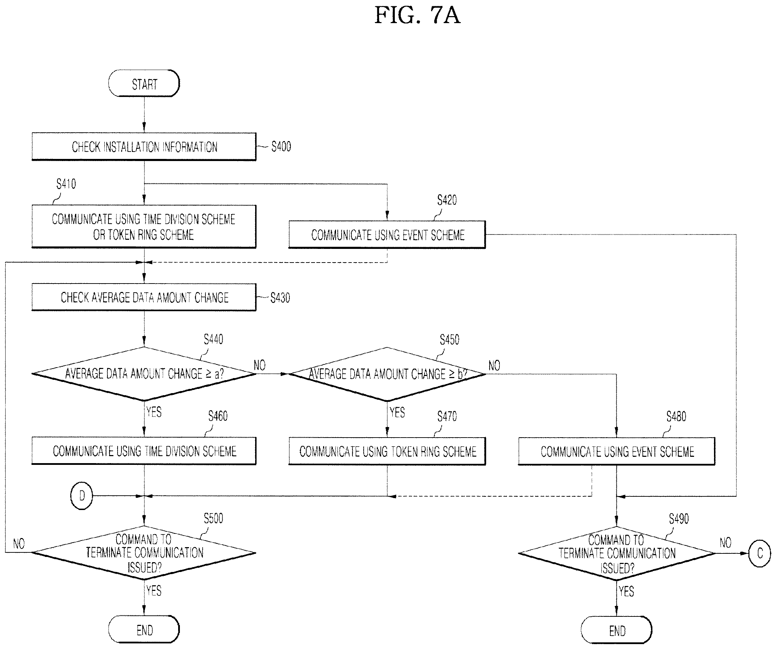

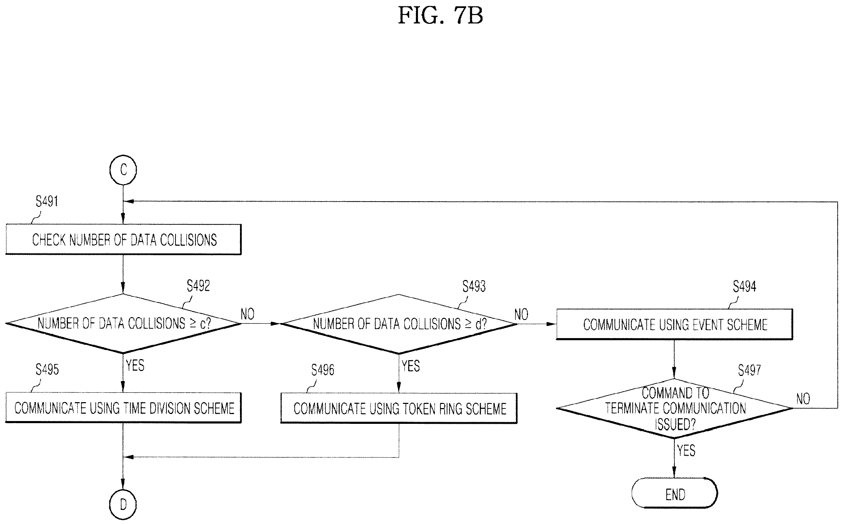

FIGS. 7A and 7B are flow charts illustrating a communication control procedure for an air conditioner according to a fourth embodiment of the present invention. In the third embodiment, the communication scheme determined based on initial installation information is maintained or changed based only on the amount of installation information. Unlike the third embodiment, in the fourth embodiment, the communication scheme is determined according to initial installation information at an initial stage of communication and is changed according to the amount of communication during communication as in the first and second embodiments.

As shown in FIGS. 7A and 7B, when communication starts, the controller of the outdoor unit 10 checks installation information of the outdoor unit 10 and the indoor units 20 and other devices through tracking (S400).

The controller of the outdoor unit 10 determines the communication scheme based on the installation information of the indoor units 20 and other devices connected to the communication line that have been checked through the tracking described above (see the third embodiment).

When the communication scheme is determined to be the time division scheme or the token ring scheme, the controller of the outdoor unit 10 performs communication according to the determined communication scheme and checks the average data amount change (S410 and S430).

Then, when the checked average data amount change is equal to or greater than a predetermined level (i.e., average data amount change ≥ a), the outdoor unit 10 determines that the amount of communication is great and maintains or changes the communication scheme as or to the time division scheme (S440 and S460).

When it is determined that the checked average data amount change is at an intermediate level (i.e., a > average data amount change ≥ b), the outdoor unit 10 maintains or changes the currently used communication scheme as or to the token ring scheme (S450 and S470).

When it is determined that the checked average data amount change is less than a predetermined level (i.e., b > average data amount change), the outdoor unit 10 changes the currently used communication scheme to the event scheme (S450 and S480).

Then, when the initial communication scheme is the time division scheme or the token ring scheme and the changed or maintained communication scheme is the time division scheme or the token ring scheme, the controller of the outdoor unit 10 checks whether or not the user has issued a command to terminate communication and returns to operation S430 if the user has not issued the command to terminate communication (S500).

On the other hand, when the communication scheme that was used at the initial stage of communication is the event scheme (S420) or when the communication scheme that was used at the initial stage of communication is the time division scheme or the token ring scheme and it is determined that the average data amount change is less than a predetermined level so that the communication scheme has been changed to the event scheme (S450 and S480), the controller of the outdoor unit 10 checks whether or not the user has issued a command to terminate communication and checks the number of data collisions if the user has not issued the command to terminate communication (S490 and S491).

If the checked number of data collisions is equal to or greater than a predetermined level (i.e., the number of data collisions ≥ c), the controller of the outdoor unit 10 determines that the amount of communication is great and changes the communication scheme to the time division scheme (S492 and S495).

If it is determined that the checked number of data collisions is at an intermediate level (i.e., c > number of data collisions ≥ d), the controller of the outdoor unit 10 changes the currently used communication scheme to the token ring scheme (S493 and S496).

In addition, if it is determined that the checked number of data collisions is less than a predetermined level (i.e., d > number of data collisions), the controller of the outdoor unit 10 maintains the currently used event scheme (S493 and S494).

Then, when the currently used event scheme has been changed to the time division scheme or the token ring scheme (S495 or S496), the controller of the outdoor unit 10 checks whether or not a command to terminate communication has been issued and returns to operation S430 if no command to terminate communication has been issued (S500).

On the other hand, if the currently used communication scheme is the event scheme and has not been changed since it is determined that the number of data collisions is less than a predetermined level, the controller of the outdoor unit 10 checks whether or not a command to terminate communication has been issued and returns to operation S491 if no command to terminate communication has been issued (S497).

Although this embodiment has been described with reference to the example where the amount of data communication is determined based on the number of data collisions in the case of the event communication scheme, the average data amount change may be checked even when communication is being performed according to the event communication scheme and an appropriate communication scheme may then be determined based on the checked average data amount change as in the first embodiment (see dotted lines in FIG. 7A).

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A communication method for an air conditioner in which at least one outdoor unit (10) and a plurality of indoor units (20) perform data communication with each other, the method comprising:
tracking an installation state of the air conditioner to check installation information (S400) of the air conditioner, wherein the installation information comprises a capacity, a number, and a type of the at least one outdoor unit (10) and the plurality of indoor units (20) connected to a communication line;
selecting a communication scheme based on the installation information of the air conditioner, wherein the communication scheme includes a time division scheme (S460), a token ring scheme (S470), and an event scheme (S480), in which data is immediately transmitted in case of an event;
checking an amount of communication of the data communication;
changing the communication scheme based on the amount of communication, wherein the amount of communication is determined based on a number of data collisions (S491), when communication is being performed according to the event scheme (S494); and
performing communication according to the changed communication scheme.

2. The communication method according to claim 1, wherein the amount of communication is determined based on an average data amount change in the data communication.

3. The communication method according to claim 1 or 2, wherein the communication scheme is changed to the time division scheme when the amount of communication is equal to or greater than a first reference constant, the communication scheme is changed to the token ring scheme when the amount of communication is less than the first reference constant and equal to or greater than a second reference constant, and changed to the event scheme when the amount of communication is less than the second reference constant.

4. The communication method according to claims 1 to 3, wherein the amount of communication is checked at regular intervals and the communication scheme is changed in real time according to a change in the amount of communication.

5. The communication method according to claims 1 to 4, wherein the time division scheme is selected when an amount of the installation information of the air conditioner is equal to or greater than a fifth reference constant, the token ring scheme is selected when the amount of the installation information of the air conditioner is less than the fifth reference constant and equal to or greater than a sixth reference constant, and the event scheme is selected when the amount of the installation information of the air conditioner is less than the sixth reference constant.

## Patentansprüche

1. Kommunikationsverfahren für eine Klimaanlage, in der mindestens eine Außenbereichseinheit (10) und mehrere Innenbereichseinheiten (20) eine Datenkommunikation miteinander ausführen, wobei das Verfahren umfasst:
Überwachen eines Installationszustands der Klimaanlage, um Installationsinformation (S400) der Klimaanlage zu prüfen, wobei die Installationsinformation eine Kapazität, eine Anzahl und den Typ der mindestens einen Außenbereichseinheit (10) und der mehreren Innenbereichseinheiten (20), die mit einer Kommunikationsleitung verbunden sind, enthält;
Auswählen eines Kommunikationsschemas auf der Grundlage der Installationsinformation der Klimaanlage, wobei das Kommunikationsschema ein Zeitunterteilungsschema (S460), ein Token-Ring-Schema (S470) und ein Ereignisschema (S480) umfasst, in welchem Daten im Falle eines Ereignisses unmittelbar gesendet werden;
Prüfen eines Umfangs an Kommunikation der Datenkommunikation;
Ändern des Kommunikationsschemas auf der Grundlage des Umfangs an Kommunikation, wobei der Umfang an Kommunikation auf der Grundlage einer Anzahl an Datenkollisionen (S491) ermittelt wird, wenn eine Kommunikation gemäß dem Ereignisschema (S494) ausgeführt wird; und
Ausführen einer Kommunikation gemäß dem geänderten Kommunikationsschema.

2. Kommunikationsverfahren nach Anspruch 1, wobei der Umfang an Kommunikation auf der Grundlage einer mittleren Datenmengenänderung in der Datenkommunikation ermittelt wird.

3. Kommunikationsverfahren nach Anspruch 1 oder 2, wobei das Kommunikationsschema in das Zeitunterteilungsschemata geändert wird, wenn der Umfang an Kommunikation gleich oder größer als eine erste Referenzkonstante ist, wobei das Kommunikationsschema in das Token-Ring-Schema geändert wird, wenn der Umfang an Kommunikation kleiner als die erste Referenzkonstante oder gleich oder größer als eine zweite Referenzkonstante ist, und wobei das Kommunikationsschema in das Ereignisschema geändert wird, wenn der Umfang an Kommunikation kleiner ist als die zweite Referenzkonstante.

4. Kommunikationsverfahren nach einem der Ansprüche 1 bis 3, wobei der Umfang an Kommunikation in regelmäßigen Abständen geprüft wird und das Kommunikationsschema in Echtzeit entsprechend einer Änderung des Umfangs an Kommunikation geändert wird.

5. Kommunikationsverfahren nach einem der Ansprüche 1 bis 4, wobei das Zeitunterteilungsschema ausgewählt wird, wenn ein Umfang der Installationsinformation der Klimaanlage gleich oder größer als eine fünfte Referenzkonstante ist, das Token-Ring-Schema ausgewählt wird, wenn der Umfang der Installationsinformation der Klimaanlage kleiner als die fünfte Referenzkonstante und gleich oder größer als eine sechste Referenzkonstante ist, und das Ereignisschema ausgewählt wird, wenn der Umfang der Installationsinformationen der Klimaanlage kleiner ist als die sechste Referenzkonstante.

## Revendications

1. Procédé de communication pour un climatiseur dans lequel au moins une unité extérieure (10) et une pluralité d'unités intérieures (20) établissent une communication de données les unes avec les autres, le procédé comprenant les étapes suivantes:
suivi d'un état d'installation du climatiseur pour vérifier les informations d'installation (5400) du climatiseur, les informations d'installation comprenant une capacité, un nombre et un type de ladite au moins une unité extérieure (10) et de la pluralité d'unités intérieures (20) connectées à une ligne de communication;
sélection d'un schéma de communication fondé sur les informations d'installation du climatiseur, le schéma de communication comprenant un schéma de division de temps (S460), un schéma d'anneau à jeton (5470) et un schéma d'événement (S480), dans lequel des données sont immédiatement transmises en cas d'un événement;
contrôle d'une quantité de communication des données de communication;
changement du schéma de communication en fonction de la quantité de communication, la quantité de communication étant déterminée sur la base d'un nombre de collisions de données (S491), lorsque la communication est en cours d'exécution conformément au schéma d'événement (S494); et
réalisation d'une communication selon le schéma de communication modifié.

2. Procédé de communication selon la revendication 1, dans lequel la quantité de communication est déterminée sur la base d'un changement de quantité de données moyenne dans la communication de données.

3. Procédé de communication selon les revendications 1 ou 2, dans lequel le schéma de communication est transformé en schéma de division de temps lorsque la quantité de communication est supérieure ou égale à une première constante de référence, le schéma de communication est transformé en schéma d'anneau à jeton lorsque la quantité de communication est inférieure à la première constante de référence et supérieure ou égale à une seconde constante de référence, et transformé en schéma d'événement lorsque la quantité de communication est inférieure à la seconde constante de référence.

4. Procédé de communication selon les revendications 1 à 3, dans lequel la quantité de communication est vérifiée à intervalles réguliers et le schéma de communication est modifié en temps réel en fonction d'une modification de la quantité de communication.

5. Procédé de communication selon les revendications 1 à 4, dans lequel le schéma de division dans le temps est sélectionné lorsqu'une quantité des informations d'installation du climatiseur est supérieure ou égale à une cinquième constante de référence, le schéma d'anneau à jeton est sélectionné lorsque la quantité des informations d'installation du climatiseur sont inférieures à la cinquième constante de référence et supérieures ou égales à une sixième constante de référence, et le schéma d'événement est sélectionné lorsque la quantité d'informations d'installation du climatiseur est inférieure à la sixième constante de référence.
